(19) Europäisches Patentamt / European Patent Office / Office européen des brevets

(11) **EP 2 343 578 A1**

(12) **EUROPEAN PATENT APPLICATION**

(43) Date of publication:
**13.07.2011 Bulletin 2011/28**

(51) Int Cl.:
*G02B 3/08* (2006.01)   *F24J 2/08* (2006.01)
*H01L 31/052* (2006.01)   *F21V 5/04* (2006.01)

(21) Application number: **09382300.3**

(22) Date of filing: **23.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
- **Garcia Ortiz, José Vicente**
  **12600 La Vall de Uixó - Castellón (ES)**
- **AIDO - Instituto Tecnologico de Optica, Color e Imagen**
  **E-46980 Paterna (ES)**
- **Gonzalez Toledo, José Ignacio**
  **16200 Motilla del Palancar - Cuenca (ES)**
- **González Toledo, Cristóbal**
  **46020 Valencia (ES)**

(72) Inventors:
- **Garcia Ortiz, José Vicente**
  **12600 La Vall de Uixó - Castellón (ES)**
- **González Toledo, José Ignacio**
  **16200 Motilla del Palancar - Cuenca (ES)**
- **González Toledo, Cristóbal**
  **46020 Valencia (ES)**
- **Wallhead, Ian Ronald**
  **46183 La Eliana - Valencia (ES)**

(74) Representative: **ABG Patentes, S.L.**
  **Avenida de Burgos 16D**
  **Edificio Euromor**
  **28036 Madrid (ES)**

(54) **A fresnel-type lens**

(57)  A Fresnel-type lens for concentrating electromagnetic radiation, in particular solar energy, in a focal region, said lens comprising two faces, one input face and one output face. The output face comprises three types of prisms, one of which being adapted to reflect light in operative mode by double total internal reflection, thus improving the overall transmission and therefore the energy collection efficiency of the lens.

FIG. 8

EP 2 343 578 A1

**Description**

## FIELD OF THE INVENTION

The invention is in the field of optical design of a non-imaging lens which is used for the concentration of electromagnetic energy (in particular, solar energy). There is a demand to collect energy from a large cross-sectional area and concentrate it into a smaller region where it can then be converted into other forms of energy (electrical, thermal). Since this is an energy collection application it is important to increase the energy collection efficiency.

## BRIEF DESCRIPTION OF THE DRAWINGS

| | |
|---|---|
| Figure 1a, 1b | Figure 1a depicts a sectional view of a Fresnel lens and Figure 1b shows a sectional view of the equivalent conventional lens. This figure will be used for the description of the prior art. |
| Figure 2 | Figure 2 depicts a sectional view of a Fresnel lens used as a solar collector wherein the incident light is coming from the left. Some relevant angles and rays are shown in the outermost ring of the Fresneltype lens. Details are shown in an enlarged view framed in a circle. This figure will be used for the description of the prior art. |
| Figure 3a, 3b, 3c | Figures 3a, 3b and 3c depict three different cases where a ray is being deviated by a prism of different angles. This figure will be used for the description of the prior art. |
| Figure 4 | Figure 4 depicts a prism like a prism defined in a concentric ring in the outside of a Fresnel lens working under single total internal reflection (single TIR) condition. The x point is the only point of reflection. This figure will be used for the description of the prior art. |
| Figure 5 | Figure 5 depicts a plot of two functions, the transmission efficiency as a result of reflection losses of a conventional Fresnel prism (function 1) and a single TIR prism (function 2). The abscissa of the plot shows the collection half angle $\alpha$ and the vertical axis shows the transmission (through the two surfaces). This figure will be used for the description of the prior art. |
| Figure 6 | Figure 6 depicts an embodiment schematically drawn of a prism adapted to work in double total internal reflection conditions. |
| Figure 7 | Figure 7 depicts the same plot as figure 5 and an additional plot has been superimposed. The additional plot is the function of the transmission efficiency of the double total internal reflection. The abscissa of the plot shows the collection half angle $\alpha$ and the vertical axis shows the transmission (through the two surfaces). |
| Figure 8 | Figure 8 depicts an embodiment of a lens according to the present invention wherein three types of prism have been combined. The path of some rays has been plotted in two enlarged views. |
| Figure 9a | Figure 9a depicts a sectional view of a further embodiment with some rings inclined towards the focus region. |
| Figures 9b-9d | Figures 9b, 9c and 9d show further embodiments with some rings inclined towards the focus region, with some rings inclined away from the focus region or, with some combination of tilts. |
| Figure 10 | Figure 10 is a frontal view of a further embodiment where some rings are divided in sectors. |

## PRIOR ART

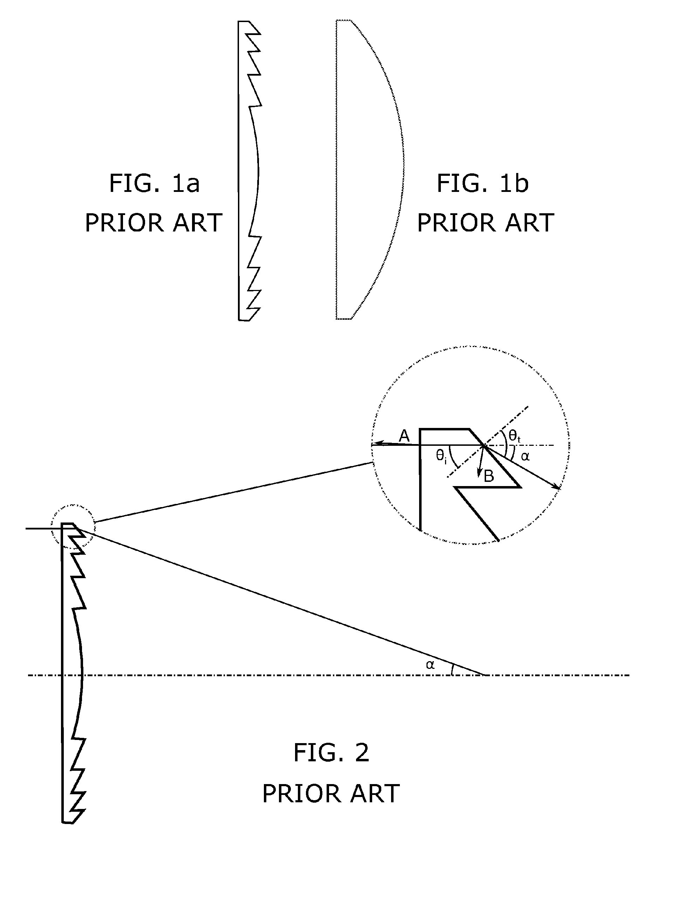

Augustine Fresnel invented the Fresnel lens in France in 1822. It is a lightweight equivalent of a conventional lens (Fig. 1) which was originally used for controlling the illumination from lighthouses.
The Fresnel lens reduces the amount of material required compared to a conventional spherical lens by breaking the lens into a set of concentric annular sections known as *Fresnel zones*. In this description Fresnel zones will be named as prisms. For each of these zones, the overall thickness of the lens is decreased, effectively chopping the continuous surface of a standard lens into a set of surfaces, with discontinuities between them. This allows a substantial reduction in thickness (and thus weight and volume of material) of the lens, at the expense of reducing the imaging quality of the lens. In recent years Fresnel lenses have been used to concentrate solar energy, often for photo-voltaic applications.

A Fresnel lens can be used for solar collectors. Figure 2 shows a Fresnel lens wherein the incident light is coming from a source located at infinity and therefore incident rays are parallel.

In figure 2, a ray is shown near the edge of the lens which is refracted and deviated by an angle, *the collection half angle* $\alpha$. The angle of incidence at the refracting surface, the surface through which the ray leaves the lens, is $\theta_i$ and the transmitted angle is $\theta_t$. This ray then reaches the focus (where a solar energy collector would be placed) at a collection half angle $\alpha$ to the optical axis (Depicted as a line with a "dash-dot" pattern). For a given lens focal length it is clear that the amount of energy collected increases with the collection half angle $\alpha$. The maximum value of the collection half angle $\alpha$ will be called *maximum collection half angle* ($\alpha_{max}$). However, it is well known that for a typical Fresnel lens such as this, the transmission efficiency (or energy collection efficiency) reduces towards the edge of the lens.

There are three principal sources of energy losses:

- Reflection losses at the refracting surfaces.
- "Geometric" losses, that is, losses caused by rays not reaching the desired region at the focus.
- Absorption losses as the ray passes through the material thickness. This depends on the choice of material and the thickness of the lens.

In Figure 2 reflection losses are shown by rays A and B. As a ray passes into and out of the lens some of the light is lost by reflection. (Ray A is shown reflecting at a small angle for clarity). Usually, conventional lenses are coated to minimize these reflection losses. Fresnel lenses, in particular plastic Fresnel lenses, and even more specifically, very large plastic Fresnel lenses, are usually not coated.

The amount of light reflected at these surfaces can be calculated by means of the well known Fresnel reflection equations. For typical refractive index values (n=1.49 for the lens material and n=1 for the air as surrounding material), the reflectance rises rapidly for rays exiting the lens above about 30o. After about 42o all the light is reflected (ray B) by total internal reflection and subsequently lost.

It is also well know that chromatic aberration also increases towards the edge of the Fresnel lenses and this can cause geometric losses. This is caused by dispersion - the refractive index varies with wavelength. The extent of this can be calculated from Snell's Law.

In summary, a Fresnel lens for energy collection should be designed with a large collection half angle ($\alpha$) but as $\alpha$ (and therefore $\theta_i$ and $\theta_t$) increase there is a rapid reduction in the power of each ray collected. A good design of a Fresnel lens modification would aim to achieve a high collection half angle ($\alpha$) with reduced refraction angles ($\theta_i$ and $\theta_t$).

Prior art relating to the modification of Fresnel lenses includes the use of a single reflecting face utilizing total internal reflection (TIR).

Total internal reflection is an optical phenomenon that occurs when a ray of light strikes a medium boundary at an angle larger than a particular critical angle with respect to the normal to the surface. If the refractive index is lower on the other side of the boundary, no light can pass through and all of the light is reflected. The critical angle is the angle of incidence $\theta_i$ above which the total internal reflection occurs.

When light crosses a boundary between materials with different refractive indices, the light beam will be partially refracted at the boundary surface, and partially reflected. However, if the angle of incidence $\theta_i$ is greater (i.e. the ray is closer to being parallel to the boundary) than the critical angle - the angle of incidence $\theta_i$ at which light is refracted such that it travels along the boundary - then the light will stop crossing the boundary altogether and instead be totally reflected back internally. This can only occur where light travels from a medium with a higher refractive index to one with a lower refractive index. For example, it will occur when passing from glass to air, but not when passing from air to glass.

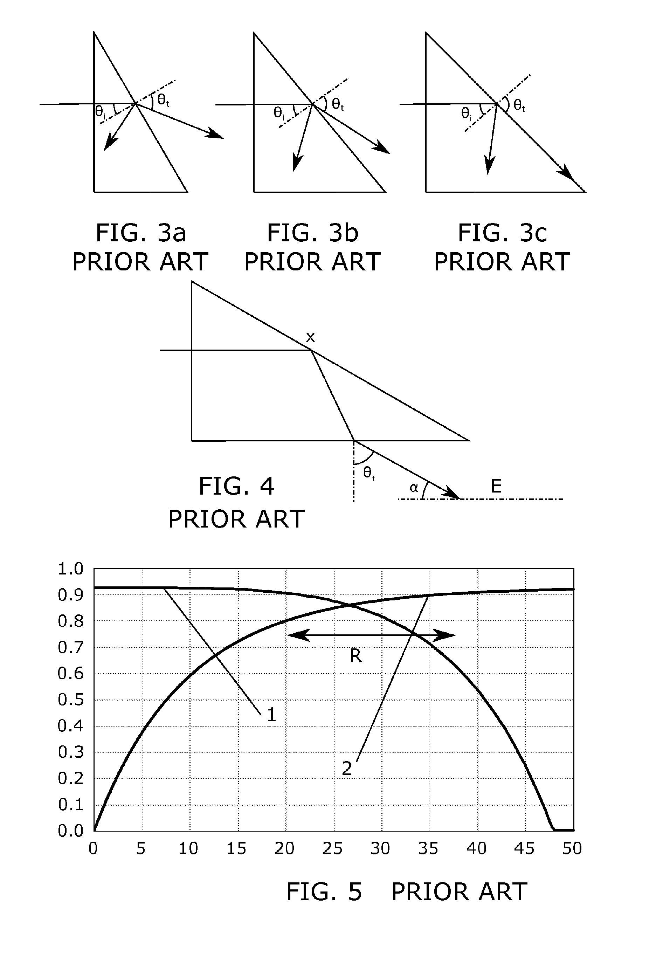

Total internal reflection can be illustrated by looking at a ray being deviated by prisms of different angles as is depicted in figure 3a, 3b and 3c. In the example of prism in figure 3a, the angle of incidence, $\theta_i$, is small and the ray is refracted with a transmitted angle, $\theta_t$. These angles are calculated using Snell's Law:

$$n_1 \sin(\theta_i) = n_2 \sin(\theta_t)$$

where $n_1$ and $n_2$ are the refractive index of the material before and after the surface respectively.

Not all of the power of the ray is refracted. Some of the power of the ray is also reflected. Prism of figure 3b has a larger angle and so $\theta_i$ and $\theta_t$ are both larger and the ray is deviated more. In this case a higher proportion of the ray is reflected (compared to prism of figure 3a).

Prism of figure 3c is shown at the, so called, critical angle where $\theta_t$ reaches 90° and the transmitted ray is said to be hypothetically travelling along the surface of the prism. In this case all of the light is reflected. That is, there is total internal reflection. Snell's Law shows that for a ray travelling from a material with a refractive index ($n_1$) of 1.49 to air ($n_2$=1.0) the critical angle is 42.155°. Any $\theta_i$ greater than (or equal to) this angle will result in 100% of the light being reflected. This assumes the surface is clean and smooth.

It is known from the prior art the use of total internal reflection in a Fresnel lens to improve the transmission in the concentric rings located in the outermost region of the lens.

Figure 4 shows a prism like a prism defined in a concentric ring in the outside of a Fresnel lens working under single total internal reflection (single TIR) condition. The prism achieves the ray deviation ($\alpha$) with one refracting surface. With a single total internal reflecting surface the ray can be deviated at the reflecting surface without loss of energy. This requires the angle of incidence at point (x) is greater than the critical angle of about 42° (which is always the case for large $\alpha$).

With a single TIR the refraction angles ($\theta_i$ and $\theta_t$) are less than with a conventional Fresnel lens. This is the reason some Fresnel lenses includes in the outermost concentric rings which form prism facets that are able to reflect light in operative mode by single internal reflection (single TIR).

Figure 5 shows two transmission functions where the argument is the collection half angle $\alpha$. The first function (1) is the transmission function for a conventional prism of a Fresnel lens. This function fell below 0.9 for the angle values above about 20º (for $n_1$ and $n_2$ used in the previous example). If a single TIR prism is combined for the concentric rings located in the outermost region of the lens, then the second transmission function (2) represents the behavior of these prisms. This second function (2) recovers the efficiency that cannot be obtained by means a conventional prism.

The plot of figure 5 shows that function (2) recovers the lost transmission efficiency for large values of $\alpha$ but there is a transition range (R) where the transmission is not totally recovered.

The posed problem is how to improve the overall efficiency of the Fresnel-type lens by means of improving the transmission in the transitional (R) range of the collection half angle ($\alpha$). This problem is solved by means of the present invention according to claim 1.

## SUMMARY OF THE INVENTION

A first aspect of the invention is a Fresnel-type lens for concentrating electromagnetic radiation in a focal region, having this lens two faces ($S_1$, $S_2$):

- *a first face ($S_1$) that is where the incident light falls* The first face ($S_1$) is usually flat and the incident light will be in most of the applications the sun light. The sun light has the incident rays parallel because the source is deemed to be located at an infinite distance.
- *a second face ($S_2$) which comprises a plurality of concentric rings which form prism facets (4, 5, 6,* 7),
  The prism is formed by three facets, the first facet is the surface of the first face ($S_1$) of the lens, the second and the third facets are the two surfaces of the Fresnel zone defined by each concentric ring.
- *the concentric rings are concentric with respect to an axis (E) where the focal (F) region is,*
  The focal (F) region can be a single spot but the industrial applications require that the spot at the focus (F) is of a desired size and profile. This can also be done by designing the lens so that all or part of the lens produces a defocused spot at the focal region.
  The invention requires that *at least two facets (4, 5) are adapted to reflect light in operative mode by double total internal reflection in such a way*
- *a light beam coming from the first face ($S_1$) of the lens is internally reflected in the first facet (4) towards the second facet (5), and then,*
- *the reflected light beam is also internally reflected again in the second facet (5) towards the first facet (4), and then,*
- *the output beam is refracted in the first facet (4) to the focal (f) region.*

The technical problem posed for the transition range (R) is solved by using facets (4, 5) that are adapted to reflect light in operative mode by double total internal reflection. Double total internal reflection allows increasing the transmission factor for those values of the collection half angle $\alpha$ where conventional prisms and single (TIR) prisms are not suitable.

The examples described in the embodiments use a shape of the prism suitable for a double total internal reflection of the light and they also use a combination with prism of the prior art that have a good transmission rate for a large range of $\alpha$ values.

During the description of the embodiments of the invention some positional references are used. Such references are taken from the sectional view of the lens according to the drawings; and details of prisms are represented from the set of sections located over the optical axis (E).

The embodiments which result from combining the dependent claims 2 to 10 are included in this description by reference.

## DETAILED DESCRIPTION OF PARTICULAR EMBODIMENTS OF THE INVENTION

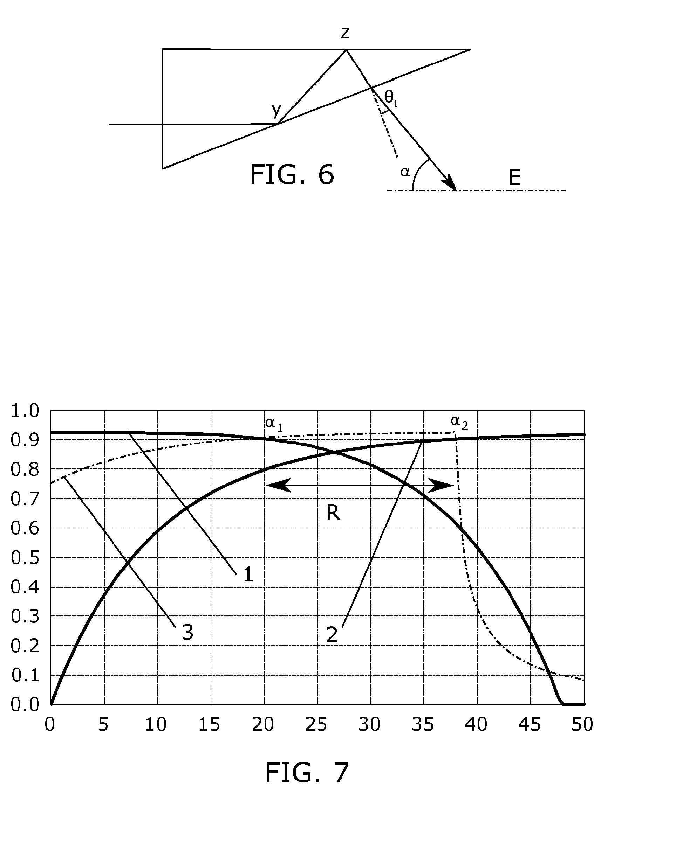

Figure 6 depicts an example of a prism as it is proposed for the Fresnel-type lens of the invention that is adapted to work under double total internal reflection (double TIR). This prism has the lower facet (4) inclined and the upper facet (5) horizontal wherein the lower facet (4) is faced to the optical axis (E).

The term *horizontal* is used because the surface of this facet is viewed in the sectional view as a straight line, but it is a cylindrical surface. The term *inclined* is applied to the lower line of figure 6 which is the sectional view of a conical surface. This interpretation should be applied to the rest of the description and the claims.

The light beam is coming from the left (according to the drawing) crossing the first face of the lens and is internally reflected in the lower facet (4) in a point (y) towards the upper horizontal facet (5). The reflected light beam again is also internally reflected in the upper horizontal facet (5) in a point (z) towards the inclined lower facet (4) but now the light beam is closer to the normal vector of the later facet (4) and therefore the refracting angles ($\theta_i$ and $\theta_t$) are now much smaller.

Figure 7 plots the same functions as figure 5 but now a new transmission function (3) of the double TIR prism according to the described example has been superimposed. The curves (the functions) of transmission efficiency for a conventional Fresnel prism (1), for a Fresnel-type prism with a single TIR (2) and for a Fresnel-type prism with double TIR (3) only consider reflection losses.

As it can be checked in figure 7, between collection half angles $\alpha$ of 0º to $\alpha_1$ a conventional Fresnel prism produces the lowest reflection losses. Between $\alpha_1$ and $\alpha_2$ a double TIR prism's design is the most efficient. For collection half angles $\alpha$ greater than $\alpha_2$ light beam starts to transmit through the second reflection point (z) of figure 6 and the single TIR prism is the most efficient. Using this information a hybrid Fresnel-type lens is proposed combining the three types of prisms:

- a first set (A) of concentric rings with respect to an optical axis (E) which form prisms with conventional facets,
- a second set (B) of concentric rings with respect the same optical axis (E) which form prisms with double TIR facets (4, 5); and optionally,
- a third set (C) of concentric rings with respect to the same optical axis (E) which form prisms with single TIR facets (6, 7).

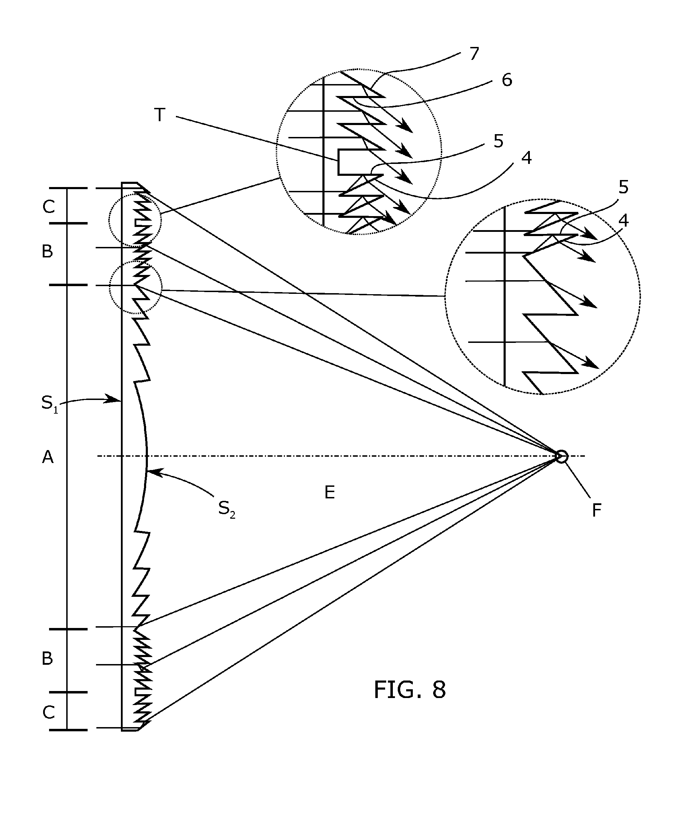

This embodiment with three sets (A, B, C) of concentric rings has been depicted schematically in figure 8. The first set is identified with letter A, the second set is identified with letter B and the third set is identified with letter C.

This embodiment includes a set (B) of concentric rings which forms prisms with double TIR between the first (A) and the third (C) set of prisms taken from the prior art. This arrangement increases the transmission in the range (R) where none of the two later sets of rings are working properly in operative mode.

In order to avoid the interference of rays exiting from a C prism, the set C of rings has been separated from the set B by means a transitional space (T).

Figure 8 shows some rays in the main lens that are focused in the focus (F) region. The enlarged views framed in circles show all cases for A, B and C sets of prisms.

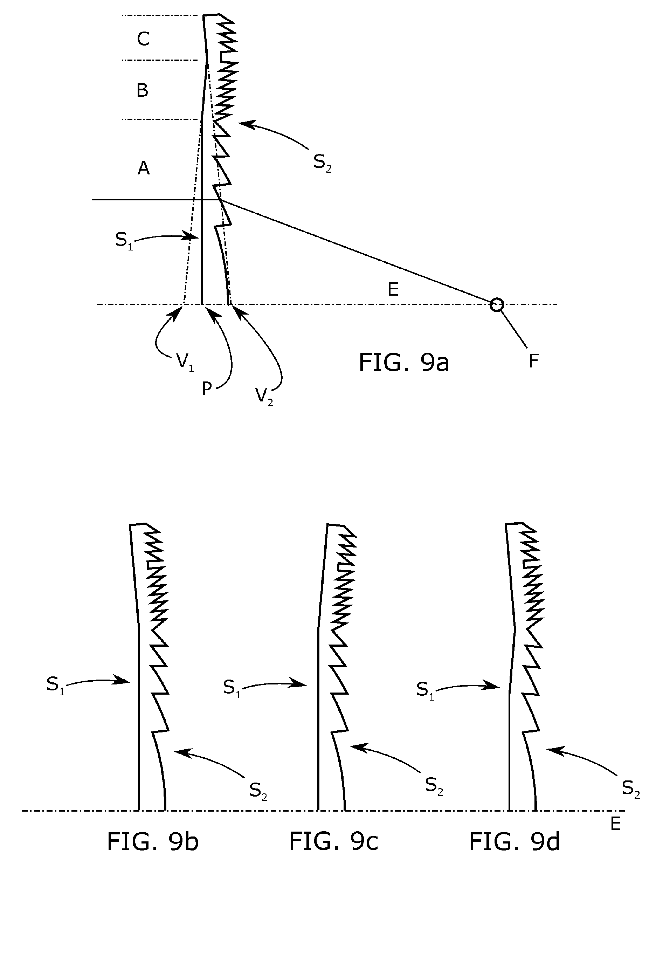

In a further embodiment of the invention, the first surface ($S_1$) of the lens corresponding to a certain set of rings is not contained in a plane but is contained in a cone. The sectional view of a particular arrangement is shown in figure 9a.

In this arrangement, a first portion of the first surface ($S_1$) of the lens corresponding to one or more rings that in operative mode are working by double total internal reflection (double TIR), the second set (B) of concentric rings, is essentially contained in a first cone where the first cone's axis and its apex ($V_1$) coincides with the optical axis (E). The apex ($V_1$) of the first cone and the focal region (F) are located on opposite sides of the point (P) where the surface (S1) intersects the optical axis (E).

In the same embodiment, a second portion of the first surface ($S_1$) of the lens corresponding to one or more rings that in operative mode are working by single total internal reflection (single TIR), the third set (C) of concentric rings, is essentially contained in a second cone where:

- the second cone's axis coincides with the optical axis (E); and,
- the apex ($V_1$) of the first cone and the apex ($V_2$) of the second cone are located in opposite sides of the point (P) where the surface (S1) intersects the optical axis (E).

Figures 9b, 9c and 9d show further embodiments with some rings inclined towards the focus region, with some rings inclined away from the focus region or, with some combination of tilts; and all of them are particular cases of the invention.

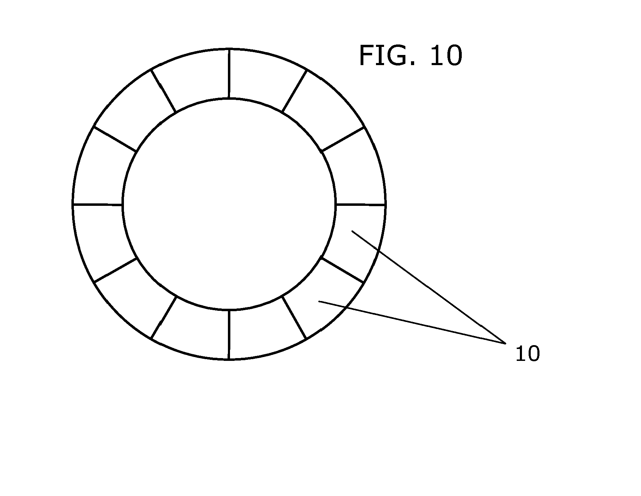

A further embodiment of the invention divides one or more rings in sectors in such a way each sector is made of a flat panel (P). The reference cone now has been approximated by portions of planes. This approximation is depicted in figure 10.

**Claims**

1. A Fresnel-type lens for concentrating electromagnetic radiation in a focal region, having this lens two faces ($S_1$, $S_2$):

   • a first face ($S_1$) that is where the incident light falls, and
   • a second face ($S_2$) which comprises a plurality of concentric rings which form prism facets (4, 5, 6, 7),
   • the concentric rings are concentric with respect to an optical axis (E) where the focal (F) region is,
   **characterized in that** at least two facets (4, 5) are adapted to reflect light in operative mode by double total internal reflection in such a way
   • a light beam coming from the first face ($S_1$) of the lens is internally reflected in the first facet (4) towards the second facet (5), and then,
   • the reflected light beam is also internally reflected again in the second facet (5) towards the first facet (4), and then,
   • the output beam is refracted in the first facet (4) to the focal (F) region.

2. A lens according to claim 1 wherein the two facets (4) are adapted to reflect light in operative mode by double total internal reflection are of the same ring.

3. A lens according to claim 1 or 2 wherein a first group (A) of concentric rings which form prisms are adapted to work in operative mode as a conventional Fresnel lens and a second group (B) of outer concentric rings which form prisms are adapted to work in operative mode by double total internal reflection.

4. A lens according to claim 3 wherein a third group (C) of concentric rings which form prisms are adapted to work in operative mode as single total internal reflection and are located in the outermost location.

5. A lens according to claim 4 wherein between the second group (B) of rings and the third group (C) of rings there is a transitional space (T) of separation.

6. A lens according to claim 4 wherein the first surface ($S_1$) or a portion of the first surface ($S_1$) of the lens corresponding to one or more rings is essentially contained in a first cone where the first cone's axis and its apex ($V_1$) coincides with the optical axis (E).

7. A lens according to claim 6 wherein the apex ($V_1$) of the first cone and the focal region (F) are located on opposite sides of the point (P) where the surface (S1) intersects the optical axis (E).

8. A lens according to claim 7 wherein the portion of the first surface ($S_1$) corresponding to the ring or rings that in operative mode are working by single total internal reflection (single TIR) is essentially contained in a second cone where:

   • the second cone's axis coincides with the optical axis (E); and,
   • the apex ($V_1$) of the first cone and the apex ($V_2$) of the second cone are located in opposite sides of the point (P) where the surface (S1) intersects the optical axis (E).

9. A lens according to any of claims 6 to 8 wherein one or more rings essentially contained in a cone are divided in sectors in such a way each sector is made of a flat panel (P).

10. A lens according to any previous claim wherein a ring which form prisms facets such in operative mode is working by double total internal reflection has the inner facet (4) inclined and faced towards the optical axis (E) and the outer facet (5) horizontal according to its sectional view.

FIG. 1a
PRIOR ART

FIG. 1b
PRIOR ART

FIG. 2
PRIOR ART

FIG. 3a
PRIOR ART

FIG. 3b
PRIOR ART

FIG. 3c
PRIOR ART

FIG. 4
PRIOR ART

FIG. 5   PRIOR ART

FIG. 6

FIG. 7

FIG. 8

FIG. 9a

FIG. 9b          FIG. 9c          FIG. 9d

FIG. 10

10

Europäisches
Patentamt

European
Patent Office

Office européen
des brevets

# EUROPEAN SEARCH REPORT

Application Number

EP 09 38 2300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2007/033089 A1 (3M INNOVATIVE PROPERTIES CO [US]; AMANO TAKASHI [JP]; NAKAMURA TSUNEHI)<br>22 March 2007 (2007-03-22)<br>* page 1, lines 14-17 *<br>* page 2, lines 3-4 *<br>* page 3, lines 24-25 *<br>* page 4, lines 3-5 *<br>* page 4, lines 18-27 *<br>* page 5, lines 16-19 *<br>* page 10, lines 14-21 *<br>* figures 5, 8, 10, 11, 12 *<br>----- | 1-5,10<br><br><br>6-9 | INV.<br>G02B3/08<br>F24J2/08<br>H01L31/052<br>F21V5/04 |
| X<br><br>Y | EP 1 251 366 A1 (UNIV MADRID POLITECNICA [ES] LIGHT PRESCRIPTIONS INNOVATORS [ES])<br>23 October 2002 (2002-10-23)<br>* paragraphs [0006], [00 9], [0 12], [0 38], [0 42] *<br>* claim 15 *<br>* figures 2, 5, 8, 9 *<br>----- | 1-4<br><br>6-8 | |
| Y | EP 0 095 414 A2 (GIRAUD HENRI ALEXANDRE)<br>30 November 1983 (1983-11-30)<br>* page 1, lines 27-29 *<br>* page 3, lines 3-7 *<br>* page 3, lines 16-24 *<br>* figures 1,3, 4, 5, 6 *<br>----- | 9 | TECHNICAL FIELDS SEARCHED (IPC)<br><br>G02B<br>F24J<br>H01L<br>F21V |

The present search report has been drawn up for all claims

| Place of search | Date of completion of the search | Examiner |
|---|---|---|
| Munich | 23 April 2010 | Denise, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 09 38 2300

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2010

| Patent document cited in search report | | Publication date | Patent family member(s) | | Publication date |
|---|---|---|---|---|---|
| WO 2007033089 | A1 | 22-03-2007 | CA | 2622126 A1 | 22-03-2007 |
| | | | CN | 101263406 A | 10-09-2008 |
| | | | EP | 1932030 A1 | 18-06-2008 |
| | | | JP | 2007079082 A | 29-03-2007 |
| | | | KR | 20080038405 A | 06-05-2008 |
| | | | US | 2008204901 A1 | 28-08-2008 |
| EP 1251366 | A1 | 23-10-2002 | AT | 439610 T | 15-08-2009 |
| | | | AU | 1708801 A | 12-06-2001 |
| | | | WO | 0140829 A1 | 07-06-2001 |
| | | | ES | 2157846 A1 | 16-08-2001 |
| | | | JP | 2003515779 T | 07-05-2003 |
| | | | US | 2003075167 A1 | 24-04-2003 |
| | | | US | 2008092879 A1 | 24-04-2008 |
| EP 0095414 | A2 | 30-11-1983 | AU | 1497883 A | 01-12-1983 |
| | | | ES | 281194 U | 16-06-1985 |
| | | | FR | 2530826 A1 | 27-01-1984 |
| | | | JP | 59015901 A | 27-01-1984 |

EPO FORM P0459

For more details about this annex : see Official Journal of the European Patent Office, No. 12/82